# EUROPEAN PATENT APPLICATION

(11) **EP 4 749 933 A1**
(43) Date of publication of application: **27.05.2026**
(21) Application number: 23855755.7
(22) Date of filing: 21.12.2023
(51) Int. Cl.: H04B 1/12, H04B 1/525

(54) **NODE FOR TRANSMISSION AND RECEPTION OF RADIO SIGNALS**

(71) Applicant: Fundación Centro Tecnoloxico de Telecomunicacions de Galicia, 36214 Vigo (ES)
(72) Inventor: LOSADA SANISIDRO, Pablo, 36214 Vigo (PONTEVEDRA) (ES); GONZÁLEZ MÉNDEZ, Pablo, 36214 Vigo (PONTEVEDRA) (ES)
(74) Representative: Isern Patentes y Marcas S.L.
(86) International application number: PCT/ES2023/070774
(87) International publication number: WO 2025/133415

(57) **Abstract**

The present invention relates to a node for transmission and reception of radio signals, and more specifically to one with multiple transmission antennas and at least one reception antenna capable of cancelling self-interference, or interference caused in the reception chain(s) by the transmission chains, also reducing the number of electronic components necessary for such cancellation.

## Description

### Technical field of the invention

The present invention relates to a node for transmission and reception of radio signals, and more specifically to one with multiple transmission antennas and at least one reception antenna capable of cancelling self-interference, or interference caused in the reception chain(s) by the transmission chains, also reducing the number of electronic components necessary for such cancellation.

### Background of the invention

In the field of telecommunications, and in particular in that of radio frequency (or simply, radio) wireless communications, multiple input-multiple output (MIMO) systems that allow multiplying the capacity of a radio link using multiple transmission and reception antennas to exploit multipath propagation are known; systems of this type are present, for example, in devices with some of the most common wireless communication standards: IEEE 802.11n (Wi-Fi 4), IEEE 802.11ac (Wi-Fi 5), HSPA+ (3G), WiMAX and Long Term Evolution (LTE).

MIMO systems allow more than one data signal to be sent and received simultaneously over the same physical medium, taking advantage of differences in the propagation channels observed between different antennas (for example, due to multipath effects). In addition, they also allow the transmission of multiple data signals sent to different receivers with one or more receiving antennas.

On the other hand, In-Band Full Duplex (IBFD) technologies allow transmitting and receiving on the same frequency simultaneously, obtaining greater efficiency (measured in bits/s/Hz) in communications (they can even double it compared to non-IBFD technologies) and reducing latency with respect to time division duplexing (TDD) systems, as there is no need to wait for the next transmission interval to emit what is to be transmitted.

However, these IBFD technologies, by transmitting and receiving simultaneously on the same frequency, have the main drawback that they can generate self-interference.

Until now, MIMO systems have not applied IBFD technologies to avoid the problem of self-interference and have been limited to time division duplexing (without using IBFD technology) or directly to frequency division duplexing (FDD), evidently depriving itself of the improvements that IBFD technologies allow to achieve.

For this reason, it is more than necessary to find some type of solution that allows combining MIMO systems with IBFD technology in such a way that the advantages of these systems can be combined with the advantages of technology.

### Description of the Invention

The present invention proposes a solution to the above problems through a node for transmission and reception of radio signals and a system for transmission and reception of radio signals, as defined below.

In a first inventive aspect, the invention provides a *node for transmission and reception of radio signals, characterized in that it comprises: at least one first transmission chain and one second transmission chain, configured to transmit a first transmission signal and a second transmission signal, respectively, and at least one reception chain, configured to receive a reception signal, wherein the reception chain also receives at least self-interference signals from the first and second transmission signals, the reception chain comprising a self-interference canceller, which in turn comprises, for each transmission chain:*
*a linear cancellation stage, configured to generate a self-interference linear cancellation signal component from a sample of the corresponding transmission signal, and*
*a non-linear cancellation stage, configured to generate a self-interference non-linear cancellation signal component from a sample of the corresponding transmission signal,*

*wherein the canceller is configured to feed the combination of the linear cancellation signal components, converted to radio frequency, to a combiner of the reception chain; and*
*wherein the canceller is configured to feed the combination of the non-linear cancellation signal components to a combiner of the reception chain.*

Throughout this document, a node will be understood to mean an element of a telecommunications system capable of receiving and/or emitting signals; in a preferred embodiment, the node is an end of a communications link, for example a transceiver, and in another embodiment it is a signal repeater, configured to receive a signal and retransmit it to another node. Transmission chain, or simply transmitter, and reception chain, or simply receiver, are to be understood as a set of elements configured to emit or receive a specific signal.

In a preferred embodiment, a transmission chain comprises one or more signal amplifiers, an antenna, a digital-to-analog converter (DAC), an upconverter and other auxiliary blocks such as pre-distortion stages, etc.

In a preferred embodiment, a reception chain comprises an antenna, one or more combiners, a digital-to-analog converter (DAC), an analog-to-digital converter (ADC), a downconverter, a linear cancellation stage, a non-linear cancellation stage, etc.

A sample of a signal must be understood to mean a copy of a signal obtained from a chain, in particular a transmission chain, and is used as a self-interference model or pattern to compare with the received signal and to be able to cancel the corresponding interference component.

Components of a given signal must be understood to mean the constituent parts of that signal which, when superimposed, give rise to said signal; in particular, they are considered the components of a transmission signal which, after being modulated, amplified and emitted, are received in an antenna of the reception chain, and are self-interference signals. Self-interference signals can be broken down into a linear component, fundamentally due to the result of amplifying the signal, and a non-linear component, due to an unwanted phenomenon of the amplification process itself. The linear component accounts for most of the power of the interference signal.

Cancellation stage or self-cancellation stage must be understood to mean the element or set of elements configured to cancel a component of an interference signal, in particular a linear component or a non-linear component. A self-interference canceller is an element that comprises at least one linear cancellation stage and one non-linear cancellation stage.

A combiner must be understood to mean an element capable of adding or combining two or more signals and, in particular, capable of combining one or more cancellation signal components with a reception signal, or several cancellation signal components with respect to one another.

In general, it must be understood that the above elements and components can be implemented both by means of separate analog and/or electronic components dedicated to a specific function, as well as by means of general purpose integrated processors or reconfigurable logic devices, configured to execute a or more of the above functions, and even as a combination of both configurations.

Advantageously, the node for transmission and reception of radio signals allows transmitting at least two transmission signals and canceling the interference generated by these at least two transmission signals in the signal received by the node in the reception chain; to cancel this self-interference, the node uses the transmission signals as a reference to generate, on the one hand, a linear component of the cancellation signal, and on the other hand, a non-linear component of the cancellation signal; each of these components are superimposed, by means of a combiner, on the reception signal, resulting in the cancellation of the unwanted self-interference signal. In a particularly advantageous manner, the linear and non-linear cancellation signals are combined with the reception signal separately, so as to avoid saturation of the amplifiers, lower frequency stages and analogue-digital converters of the receiver. Furthermore, the configuration object of the present invention allows the number of transmission and/or reception chains to be expanded very easily, as it is a fundamentally modular design.

Additionally, the node architecture can be adapted to other frequencies and bandwidths more easily than other known solutions, in many cases without hardware modifications. Specifically, Stanford architectures (see Balatsoukas-Stimming, A., Austin, A.C., Belanovic, P. *et al.* "Baseband and RF hardware impairments in full-duplex wireless systems: experimental characterisation and suppression", J Wireless Com Network 2015, 142 (2015), https://doi.org/10.1186/s13638-015-0350-1) support reduced bandwidths compared to the proposed architecture, and in general, when working band changes require a redesign of the cancellation stages. Classic Rice architectures are generally more flexible than Stanford architectures in terms of working frequency, but significant signal bandwidth changes would still require a hardware redesign. In contrast, the architecture of the node object of the present invention would only require the construction of new hardware if the working frequencies exceeded the sampling rate of the analog-digital and digital-analog converters of the system. However, current technologies make it possible to build converters of several GHz in bandwidth, which covers a large number of bands and frequencies used in practice. Thus, if the proposed system in-band full duplex, IBFD, is to be used at other frequencies or with higher bandwidth signals, the corresponding architecture could use the same hardware, simply reconfiguring the firmware of the digital signal processing device. This is possible even if the working frequency and/or bandwidth vary by even a few orders of magnitude.

In a particular embodiment, *the linear cancellation stage, the non-linear cancellation stage, or both, comprise a filter bank the response of which is defined by a set of coefficients.*

In this document it will be understood that the coefficients of the set of coefficients are a set of values or adjustment parameters that allow obtaining a specific frequency response in a signal filter; in dependence of the specific implementations, the coefficients will be understood to be made up of design parameters of a physical filter, in the embodiment in which filters of this type are used, or variables of a software program or reconfigurable logic device configured to reproduce the claimed function in those embodiments that include a filter digitally implemented by software.

Advantageously, the coefficients define the behaviour of the filter, and can be adjusted to obtain a particular result.

In a particular embodiment, *the linear cancellation stage, the non-linear cancellation stage, or both, comprise a coefficient calculation block configured to generate coefficients for the filter bank.*

Advantageously, the filter coefficients can preferably be modified dynamically in dependence of the error signal obtained by comparing the signal obtained from cancelling the self-interference with a reference signal, so that a closed control loop is implemented for the cancellation.

In a particular embodiment, *the coefficient calculation block is configured to implement a least squares algorithm such as: Filtered-X Least Mean Square, Recursive Least Square, Normalized Least Mean Square.*

Advantageously, the coefficients are associated with functions or algorithms that model the desired behaviour and allow the power of the error signal obtained to be minimized. Furthermore, the adaptive algorithms with which self-interference cancellation is achieved in the node are transparent to the transmitted signal, that is, no specific characteristic is needed in the transmitted waveform. Thus, the cancellation system would be applicable to multiple use cases, including: in communications systems such as communications modems and communications relays, as well as outside communications systems, where the phenomenon of self-interference also occurs, as may be the case of smart jammers, or radars, or spectral sensing systems with transmission of simultaneous communications signals (Integrated Sensing and Communication, ISAC).

In a particular embodiment, *the linear cancellation stage is fed by a sample of the baseband reception signal, taken after the corresponding combiner, for the calculation of coefficients.*

Advantageously, the baseband reception signal is fed to the block to calculate the coefficients and thus generate the linear cancellation component in a suitable and effective manner.

In a particular embodiment, *the linear cancellation stage comprises a phase correction block.*

Advantageously, the phase correction block makes it possible to compensate for any phase shifts that may occur between the generation of the cancellation signal and its combination with the received signal, ensuring the stability of the system.

In a particular embodiment, *the non-linear cancellation stage is fed by a sample of the baseband reception signal, after the combiner, for the calculation of coefficients.*

Advantageously, the reception signal after the combiner is free of both self-interference signal components and only contains the reception signal as it was emitted at the output of the transmitter that generated it; this interference-free reception signal is used as a reference for the calculation of the coefficients with which the non-linear component of the cancellation signal is generated.

In a particular embodiment, *the non-linear cancellation stage comprises a non-linear component generation block, configured to model the transfer function of the elements* of a *transmission chain together with the response of the self-interference channel.*

Advantageously, the non-linear component generation block allows the coefficients to be adjusted so that their response is adjusted to the behaviour of one or more elements of the transmission chain that alter the transmission signal and contribute to self-interference.

In a particular embodiment, *the nonlinear component generation block is configured to implement a polynomial non-linearity model.*

Advantageously, the non-polynomial linearity model is a non-linear model, which serves to model the non-linear response of certain components, in particular those components that generate non-linear self-interference, such as digital-analog converters, upconverters and power amplifiers.

In a particular embodiment, the node *further comprises additional transmission chains and*/*or reception chains.*

Advantageously, the node can be expanded with as many transmission chains or as many reception chains as desired, in dependence of the needs or requirements of the telecommunications system.

In a particular embodiment, *the transmission chains comprise upconverters, digital-analog converters, power amplifiers and antennas.*

Advantageously, the upconverters allow the frequency of a signal to be adjusted and in particular increased in a controlled manner, for example, to adapt it to the desired emission frequency; digital-analog converters allow a digital signal modulated according to a message to be transmitted to be transformed into an equivalent analog signal; power amplifiers allow the power of the radio frequency signal to be expanded as a step prior to emission through the antenna.

In a particular embodiment, *the at least one reception chain comprises a downconverter, an analog-digital converter and an antenna.*

Advantageously, the downconverters allow the frequency of a signal to be adjusted and in particular decreased in a controlled manner, for example, to move it from a reception frequency to a frequency suitable for processing by a demodulator; analog-digital converters allow an analog signal to be transformed into a digital signal that preserves the information received; the antenna allows radio frequency signals to be captured.

In a second inventive aspect, the invention provides a *system for transmission and reception of radio signals, comprising at least two nodes according to any of the preceding claims.*

Advantageously, an assembly with more than one node such as that of the first inventive aspect allows the implementation of a MIMO communications system, with an improved reception signal as a result of the cancellation of self-interference.

These and other features and advantages of the invention will become apparent from the description of the preferred, but not exclusive, embodiments which are illustrated by way of non-limiting example in the accompanying drawings.

### Brief description of the drawings

- Figure 1: shows an exemplary embodiment of the node for transmission and reception of radio signals with two transmission branches and one reception branch.
- Figure 2: shows another exemplary embodiment of the node for transmission and reception of radio signals with a number n of transmission branches and m reception branches.

### Detailed description of an exemplary embodiment

The following detailed description provides numerous specific details as examples to provide a thorough understanding of the relevant teachings. However, it will be apparent to those skilled in the art that the present teachings can be implemented without such details.

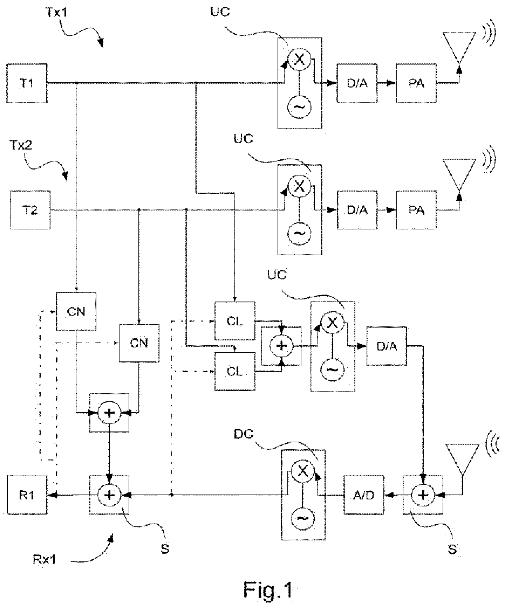

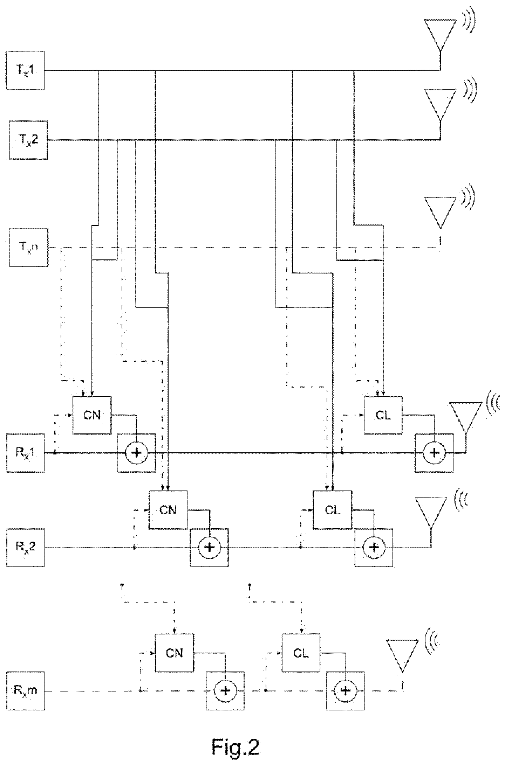

Figure 1 shows a preferred exemplary embodiment of a multi-antenna node, which represents a case with two transmitters (Tx1, Tx2) and one receiver (Rx1). In other embodiments, the node could include any number of transmitting and receiving antennas, as long as there are at least two transmitters and one receiver; an example with this configuration, with n transmitters and m receivers, is shown in Figure 2.

Figure 1 shows the simplest example, comprising two transmitters (Tx1, Tx2), each emitting a different signal through its antenna, and one receiver (Rx1). In general, each transmitting antenna generates a self-interference component towards each existing receiver, which must be suitably cancelled to achieve an IBFD system; more specifically, in the example described, each of the two transmitting antennas generates a self-interference component on the receiving antenna. This principle can be extended whether the number of transmitting antennas is increased (in which case each receiving antenna would receive as many self-interference components as there are transmitting antennas) or if the number of receivers is increased (in which case, each additional receiver would receive one self-interference component from each transmitting antenna), according to the example shown in Figure 2.

In the example shown in Figure 1, the transmission chains (Tx1, Tx2) are identical and comprise an upconverter (UC), a digital-to-analog converter (D/A), a power amplifier (PA) and an antenna. In turn, the reception chain (Rx1) includes an antenna, an analog-digital (A/D) converter, a downconverter (DC), and two combiners (S), one arranged between the antenna and the analog-digital (A/D) converter, and another arranged at the output of the downconverter (DC); the function of these combiners (S) is to combine the reception signal with the linear or non-linear component of the cancellation signal, as appropriate.

The described node allows the components of each self-interference signal received by the receiver (Rx1) to be separately cancelled; to do this, two linear and non-linear cancellation components are calculated separately, said components being necessary to eliminate the self-interference signal generated by each of the two transmitters (Tx1, Tx2). At the receiver (Rx1), the separately generated cancellation components are combined into a single signal which is then added to the signal received at one of the combiners (S).

These components are generated in the self-interference canceller, which comprises a linear cancellation (CL) stage, and a non-linear cancellation (CN) stage for each transmission chain (Tx1, Tx2). As shown in Figure 1, each linear cancellation (CL) stage and each non-linear cancellation (CN) stage is fed by a sample of the transmission signal from one of the transmission chains (Tx1, Tx2), before going through the upconverter (UC).

The linear cancellation (CL) stages add the generated cancellation signals and feed them to an upconverter (UC) and a digital-analog (D/A) converter to convert them to radio frequency before feeding them to the reception chain (Rx1) by means of a combiner (S) arranged between the antenna and the analog-digital (A/D) converter. The non-linear cancellation stages (CN) add the cancellation signals generated and feed them to the signal received in the reception chain (Rx1), by means of a combiner (S) arranged at the output of the downconverter (DC); the resulting signal after combining the two signals is fed to the two non-linear cancellation (CN) stages to implement a closed control loop and facilitate the calculation of the coefficients.

In the example described, each linear canceller, or linear cancellation (CL) stage, includes a finite impulse response (FIR) filter the coefficients of which are adaptively calculated in dependence of the transmitted signal and the degree of self-interference observed in the cancellation result. The filter takes the transmitted signal and modifies it so that it resembles as much as possible the self-interference received by the receiver (Rx1), so that later, in an analog signal combiner (S), the desired cancellation is achieved. Prior to a coefficient adaptation block, a phase correction block is included on the received signal, to correct hardware imperfections.

Coefficient adaptation algorithms can be based on one or more mathematical models, for example, filtered-X LMS, Recursive Least Square (RLS) or Normalized LMS (NLMS).

The non-linear cancellation (CN) stage has three parts: a first block that applies a non-linear transformation on the transmitted signal to generate a series of non-linear components, a set of FIR filters that process these components and generate a cancellation signal, and a coefficient adaptation block that recalculates the coefficients of these filters from a sample of the reception signal. The non-linear cancellation (CN) stage is based on considering a polynomial model of the power amplifier (PA), according to which its non-linear components are generated from a memory polynomial transfer function (memory polynomial model). The order of the polynomial model implemented will depend on the power amplifier (PA) used: if an amplifier with a relatively linear behaviour is adopted, a low order should be enough to cancel self-interference, while if the device has a more marked non-linear character, a higher order must be used in the canceller. On the other hand, each of the coefficient calculation blocks can apply, for example, the previously mentioned LMS, RLS or NLMS algorithms to adapt the coefficients of the FIR filters. Finally, the signal generated by the filters is combined into a single cancellation signal which is then added to the received signal already processed by the linear cancellation (CL) stage through a combiner (S).

In the proposed example, all digital blocks can be implemented on the same integrated circuit or chip. Consequently, the node for transmission and reception can be implemented as a compact and simple hardware element, in which it is not necessary to design customized radio frequency components, as is the case, for example, with Stanford architecture analog cancellers. Likewise, this implementation allows for a smaller area and weight in the system, as well as resulting in lower energy consumption. Specifically, in the event that the chip integrates analog-digital converters and digital-analog converters, since analog elements are not required to implement the upconverters and downconverters, the transmitted and received signals are less affected by the imperfections of components of this type, such as intermodulation, oscillator leakage and the presence of spurious components, or I/Q balance problems.

The exemplary node for transmission and reception described above and shown in Figure 1 can be expanded with as many additional transmission and reception chains as many as practical or advantageous. Figure 2 shows an exemplary generic node with n transmission chains (Tx1,...,Txn) and m reception chains (Rx1,..., Rxm). The constituent elements are analogous to those described in the previous example, and only their number changes. Figure 2 shows, on the side of the transmitters and receivers, two chains, plus a generic chain (Txn, Rxm) that represents, in a dashed line, a generic number of transmission chains.

The proposed multi-antenna cancellation architecture requires a single analog combiner for each receiver. This combiner applies a linear cancellation signal that eliminates linear self-interference components from all transmitters in the system. This is especially in contrast to Stanford architectures, where eliminating each self-interference component would require a dedicated analog cancellation block. Accordingly, if a Stanford system includes N transmitters and M receivers, in a general case it should incorporate a total of NxM cancellation blocks, while the proposed architecture solves the problem with M analog combiners. Consequently, the proposed system is more scalable in dependence of the number of antennas used. This is particularly of interest in current communications systems, since currently a significant number of antennas can be used; for example, in 5G systems up to 8 transmission antennas and 8 reception antennas can be used, and in fact Radio Frequency System-on-Chip (RFSoC) devices incorporate up to 16 A/D and D/A converters inside same.

## Claims

1. A node for transmission and reception of radio signals, **characterized in that** it comprises:
at least one first transmission chain (Tx1) and one second transmission chain (Tx2), configured to transmit a first transmission signal and a second transmission signal, respectively, and
at least one reception chain (Rx1), configured to receive a reception signal, wherein the reception chain (Rx1) also receives at least self-interference signals from the first and second transmission signals, the reception chain (Rx1) comprising a self-interference canceller, which in turn comprises, for each transmission chain (Tx1, Tx2):
a linear cancellation (CL) stage, configured to generate a self-interference linear cancellation signal component from a sample of the corresponding transmission signal, and
a non-linear cancellation (CN) stage, configured to generate a self-interference non-linear cancellation signal component from a sample of the corresponding transmission signal,
wherein the canceller is configured to feed the combination of the linear cancellation signal components, converted to radio frequency, to a combiner (S) of the reception chain; and
wherein the canceller is configured to feed the combination of the non-linear cancellation signal components to a combiner (S) of the reception chain.

2. The node according to the preceding claim, wherein the linear cancellation (CL) stage, the non-linear cancellation (CN) stage, or both, comprise a filter bank the response of which is defined by a set of coefficients.

3. The node according to the preceding claim, wherein the linear cancellation (CL) stage, the non-linear cancellation (CN) stage, or both, comprise a coefficient calculation block configured to generate coefficients for the filter bank.

4. The node according to the preceding claim, wherein the coefficient calculation block is configured to implement an algorithm from among: Filtered-X Least Mean Square, Recursive Least Square, Normalized Least Mean Square.

5. The node according to any of claims 2-4, wherein the linear cancellation (CL) stage is fed by a sample of the baseband reception signal, before the combiner (S), for the calculation of coefficients.

6. The node according to any of the preceding claims, wherein the linear cancellation (CL) stage comprises a phase correction block.

7. The node according to any of claims 2-6, wherein the non-linear cancellation (CN) stage is fed by a sample of the baseband reception signal, after the combiner (S), for the calculation of coefficients.

8. The node according to any of the preceding claims, wherein the non-linear cancellation (CN) stage comprises a non-linear component generation block, configured to model the transfer function of the elements of a transmission chain together with the response of the self-interference channel.

9. The node according to the preceding claim, wherein the non-linear component generation block is configured to implement a polynomial non-linearity model.

10. The node according to any of the preceding claims, further comprising additional transmission chains (Txn) and/or reception chains (Rxm).

11. The node according to any of the preceding claims, wherein the transmission chains (Tx1, Tx2) comprise upconverters (UC), digital-analog converters (D/A), power amplifiers (PA) and antennas.

12. The node according to any of the preceding claims, wherein the at least one reception chain (Rx1) comprises a downconverter (DC), an analog-digital converter (A/D) and an antenna.

13. A system for transmission and reception of radio signals, comprising at least two nodes according to any of the preceding claims.
